# EUROPEAN PATENT SPECIFICATION

(11) **EP 4 458 589 B1**
(45) Date of publication and mention of the grant of the patent: **01.04.2026**
(21) Application number: 22915467.9
(22) Date of filing: 17.10.2022
(51) Int. Cl.: G01K 11/12, B60C 19/00, G01M 17/02, G06Q 10/20, G01N 21/78, B60C 11/24, B60C 23/20

(54) **DEGRADATION STATE DETERMINATION METHOD AND APPARATUS**
VERFAHREN UND VORRICHTUNG ZUR BESTIMMUNG DES DEGRADATIONSZUSTANDS
PROCÉDÉ ET DISPOSITIF DE DÉTERMINATION D'ÉTAT DE DÉGRADATION

(30) Priority: 27.12.2021 JP 2021213478; 27.12.2021 JP 2021213465
(43) Date of publication of application: 06.11.2024
(73) Proprietor: BRIDGESTONE CORPORATION, Chuo-ku Tokyo 104-8340 (JP)
(72) Inventor: YAMAMOTO Taku, Tokyo 104-8340 (JP); MORIGUCHI Akira, Tokyo 104-8340 (JP)
(74) Representative: Marks & Clerk LLP
(86) International application number: PCT/JP2022/038642
(87) International publication number: WO 2023/127232

(56) References cited:
- JP-A- 2006 300 912
- JP-A- 2007 225 584
- JP-A- 2013 186 044
- JP-A- 2013 228 348
- JP-A- 2017 026 613
- JP-A- 2017 150 952
- JP-A- 2019 117 212
- KR-A- 20100 077 672
- KR-A- 20110 052 334
- US-A1- 2003 047 264
- US-A1- 2006 042 366
- US-A1- 2014 127 738
- US-A1- 2021 150 168
- US-A1- 2021 223 223

## Description

### TECHNICAL FIELD

The present invention relates to a degradation state determination method and a degradation state determination apparatus.

### BACKGROUND

In recent years, with the development of the sharing economy in the transportation industry and the increasing use of retreaded tires, technology for understanding the degradation state of tires has been attracting attention. For example, Patent Literature (PTL) 1 discloses a tire whose usage limit is clearly indicated by a difference in the degree of discoloration between a character portion and a background portion when a display portion is exposed to light.

### CITATION LIST

### Patent Literature

PTL 1: JP 2006-273260 A

PTL 2: US 2021/150168 A1 which discloses a product label with a colorimetric sensor array and a code, and the system and the method are mainly that the product label is attached to a fresh food, so that at least one sensing material of the colorimetric sensor array undergoes a chemical reaction with at least one metabolic molecule of the fresh food to change from an initial color to an indicating color. By obtaining an image comprising an appearance, the code and the indicating color of the fresh food through an image acquisition device, also provides instant information associated with the fresh food by a processing device according to a comparison result of the image and a database.

PTL 3: US 2021/223223 A1 which discloses a system and a method for managing and trading fresh foods according to a flavor thereof, comprising a plurality of fresh foods, an image capturing module, a processing module and a classification module. The fresh food is attached with a product label including a code and a colorimetric transducer array that comprises at least one sensing material for sensing the fresh food. The sensing material undergoes a chemical reaction with at least one metabolic molecule of the fresh food to change the sensing material from an initial color to an indication color. The image capturing module captures an image comprising an appearance of the fresh food, the code and the indication color. The processing module provides real-time information according to a comparison result between the image and a database. The classification module receives the real-time information and classifies the fresh food according to the real-time information.

PTL 4: US 2014/127738 A1 which discloses a two-dimensional code-type time-temperature indicator wherein the color or shape of which changes in accordance with time and temperature conditions, and to a method for manufacturing the time-temperature indicator, to a quality guarantee system using the time-temperature indicator, and to a quality guarantee method using the quality guarantee system. The time-temperature indicator comprises: nanobeads containing a microorganism for generating lactic acids using nutrient components, an indicating agent for indicating the change in color by means of the generated lactic acids, an immobilization material for immobilizing the microorganism, the indicating agent, and the nutrient components; a base having a bonding layer; and a cover film.

PTL 5: JP 2017026613 A which discloses deterioration state determination indicators that are made of one or a mixture of organic pigments and/or inorganic pigments, and determine the deterioration state of an object by estimating the length of passage of a time from the state of color change caused by change with time of the indicators of which color has migrated to the object.

PTL 6: US 2006/042366 A1 which discloses a temperature indicator that includes at least one reactive substance and at least one dye substance. The at least one reactive substance has a threshold temperature and the at least one dye substance has at least one characteristic peak in its absorption or emission spectrum. When an excess temperature is reached in the tire, the at least one reactive substance is heated above the threshold temperature and reacts with the at least one dye substance so as to modify the at least one characteristic peak. A related pneumatic tire includes at least one such temperature indicator.

PTL 7: US 2003/047264 A1 which discloses a tire and a method for analyzing the temperature exposure to the tire. The tire and the method allow an investigator to determine the maximum temperature the tire experienced during its operation. This information offers a potential cause for the tire failure by allowing the investigator to determine a maximum temperature experienced by an area of the tire by reviewing a non-reversible, temperature-indicating label positioned at a location in the tire. The information may be used to identify a potential cause of a tire failure after the failure has occurred. The information may also be used to identify a damaged tire before the tire fails.

PTL 8: KR 20100077672 A which discloses a pneumatic tire for vehicles comprising a tread, a sidewall, a bead portion, and a temperature measuring/recording unit. The temperature measuring/recording unit is installed on the outer surface of the bead portion. The temperature measuring/recording unit is composed of a temperature tape which comprises multiple temperature displays for the section from 150 to 300°C. The temperature display consists of irreversible temperature paint whose color changes at each corresponding temperature.

### SUMMARY

### (Technical Problem)

However, the technology in PTL 1 displays a pre-printed expiration date, which is not accurate enough to be used as an objective index of the degradation state of the tire and of the rubber members that constitute the tire. It is also known that the travel state of a vehicle is strongly related to the degradation state of tires mounted on the vehicle.

In light of such circumstances, it is an aim of the present invention to provide a degradation state determination method and a degradation state determination apparatus capable of determining the degradation state of a target object with high accuracy.

### (Solution to Problem)

A degradation state determination method according to an embodiment of the present invention is according to claim 1.

A degradation state determination apparatus according to an embodiment of the present invention is according to claim 7.

### (Advantageous Effect)

According to the present invention, a degradation state determination method and a degradation state determination apparatus capable of determining the degradation state of a target object with high accuracy can be provided.

### BRIEF DESCRIPTION OF THE DRAWINGS

In the accompanying drawings:
FIG. 1 is a diagram illustrating a configuration example of a degradation state determination apparatus according to an embodiment of the present invention;
FIG. 2 is a diagram illustrating a configuration example of a degradation state determination system that includes the degradation state determination apparatus in FIG. 1;
FIG. 3 is a diagram illustrating a configuration example of an indicator;
FIG. 4 is a flowchart illustrating an example of a first process included in a degradation state determination method according to an embodiment of the present invention;
FIG. 5 is a diagram illustrating a configuration example of a color change database;
FIG. 6 is a flowchart illustrating an example of a second process included in a degradation state determination method according to an embodiment of the present invention;
FIG. 7 is a diagram illustrating a configuration example of an indicator database;
FIG. 8 is a flowchart illustrating an example of a third process included in a degradation state determination method according to an embodiment of the present invention;
FIG. 9 is a diagram illustrating a configuration example of a travel state determination apparatus not according to an embodiment of the present invention but useful for understanding the present invention;
FIG. 10 is a diagram illustrating a configuration example of a travel state determination system that includes the travel state determination apparatus in FIG. 9;
FIG. 11 is a flowchart illustrating an example of a first process included in a travel state determination method; and
FIG. 12 is a flowchart illustrating an example of a third process included in a travel state determination method.

### DETAILED DESCRIPTION

A degradation state determination apparatus and a degradation state determination method according to embodiments of the present invention and a travel state determination method and a travel state determination apparatus not according to the present invention but useful for understanding the embodiments of the present invention are described below with reference to the drawings. Parts in the drawings that are the same or correspond are allotted the same reference signs. In the explanation of the present embodiment, a description of identical or equivalent portions is omitted or simplified as appropriate.

### (First Embodiment)

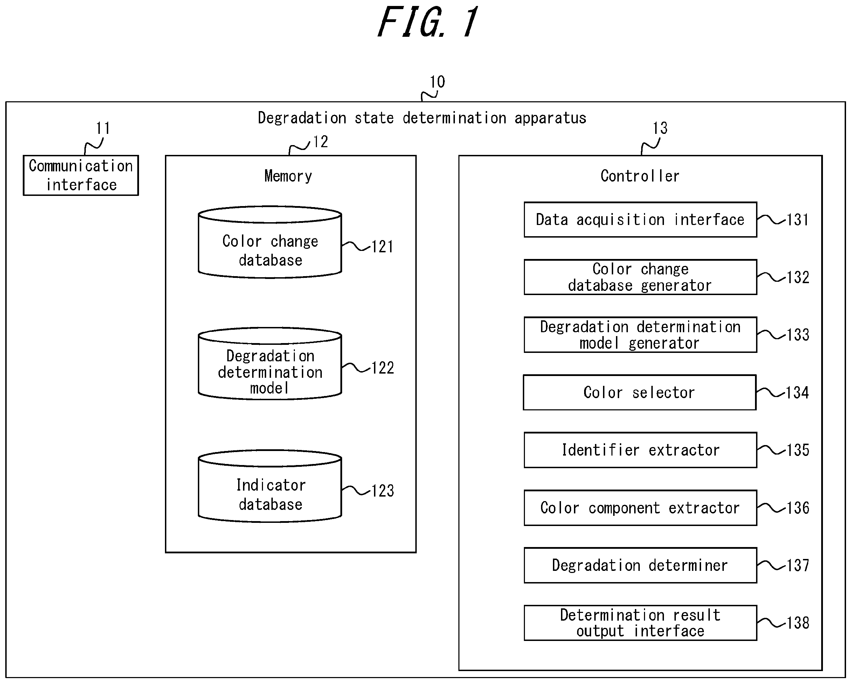

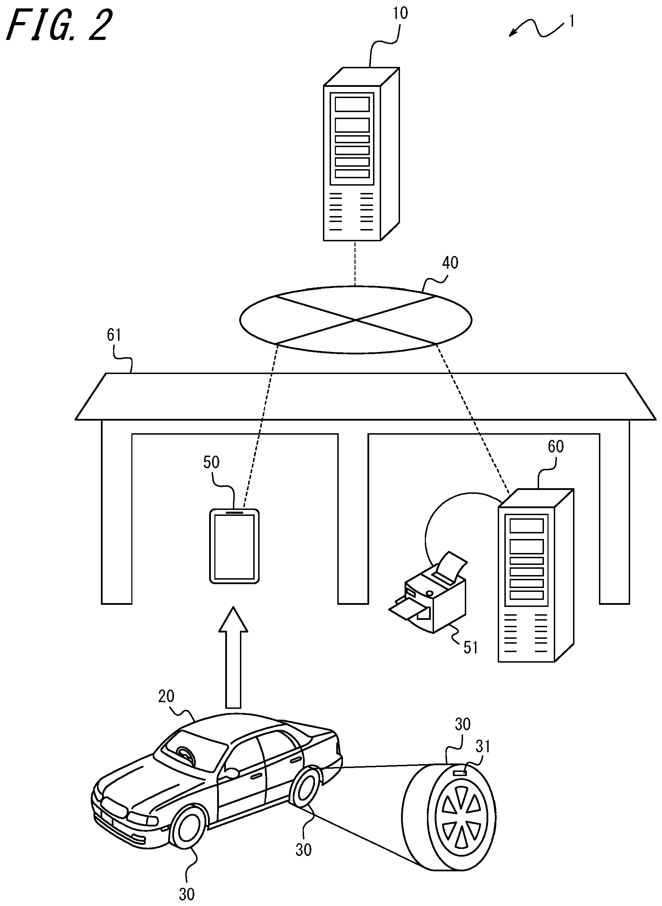

FIG. 1 is a diagram illustrating a configuration example of a degradation state determination apparatus 10 according to the present embodiment. FIG. 2 is a diagram illustrating a configuration example of a degradation state determination system 1 that includes the degradation state determination apparatus 10 in FIG. 1. The degradation state determination apparatus 10 is an apparatus for determining the degradation state of a target object that is the target of determination of the degradation state based on a color of an indicator 31 attached to the target object. In the present embodiment, the target object is a tire 30, but the target object is not limited to being the tire 30. The degradation state of the tire 30 determined by the degradation state determination apparatus 10 may, for example, be used to present the expected service life, a suitable vulcanization method, or the like to the user in the case of retreading the tire 30. Although the degradation of the tire 30 includes factors not apparent from the external appearance (such as hardening), the degradation can be determined with high accuracy by the degradation state determination apparatus 10. Retreading refers to the process of scraping off the tread rubber of the tire 30, affixing and vulcanizing new rubber, and then reusing the tire 30. A pre-cured tread (PCT) is sometimes used. The user is the user of a management facility 61 for the tire 30 where retreading and other operations are performed. In particular, the user is the driver or owner of the vehicle 20.

The degradation state determination apparatus 10 includes a communication interface 11, a memory 12, and a controller 13. The controller 13 includes a data acquisition interface 131, a color change database generator 132, a degradation determination model generator 133, a color selector 134, an identifier extractor 135, a color component extractor 136, a degradation determiner 137, and a determination result output interface 138. In terms of hardware configuration, the degradation state determination apparatus 10 may, for example, be a computer such as a server. Details of the constituent elements of the degradation state determination apparatus 10 are described below.

The degradation state determination apparatus 10, together with at least one of a terminal apparatus 50, a printing apparatus 51, and a server 60 connected by a network 40, may form a degradation state determination system 1. The network 40 is, for example, the Internet, but may be a Local Area Network (LAN).

The terminal apparatus 50 is a general purpose mobile terminal such as a smartphone or tablet terminal but is not limited to such a mobile terminal, as long as the terminal apparatus 50 includes an imaging function and a display function. The terminal apparatus 50 is used by an administrator or user of the management facility 61 when, for example, the degradation state of the tire 30 is determined. The terminal apparatus 50 may use the imaging function to capture an image of the indicator 31 attached to the tire 30 and transmit the resulting image to the degradation state determination apparatus 10 via the network 40. The imaging function is, for example, realized by a camera included in the terminal apparatus 50. The terminal apparatus 50 may also acquire the degradation state determination result from the degradation state determination apparatus 10 via the network 40 and use the display function to display the result to the user. The display function is, for example, realized by a display such as an LCD included in the terminal apparatus 50. Here, the terminal apparatus 50 may include a touch panel display integrated with a touch sensor that detects contact by the user and identifies the contact position.

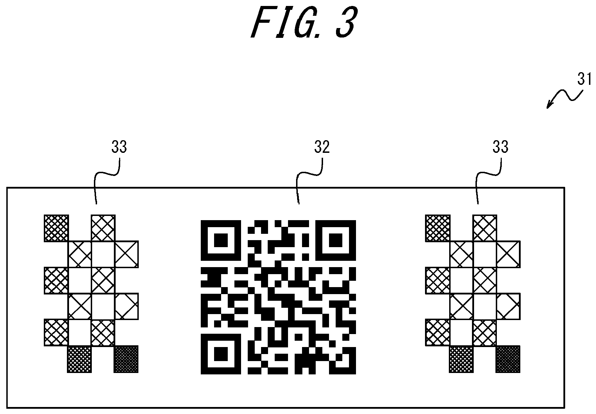

The printing apparatus 51 is, for example, a color inkjet printer but is not limited to a color inkjet printer, as long as the apparatus is capable of printing a plurality of color components. The printing apparatus 51 is used to print an identifier 32 and a color pattern 33 (see FIG. 3), described below, on a print medium such as paper or film (membranous resin), rubber, or the like when creating the indicator 31 to be attached to the tire 30. In the present embodiment, the printing apparatus 51 acquires print data from the degradation state determination apparatus 10 via the network 40 and the server 60 and performs printing to create the indicator 31. Here, the print data is indicator data including the identifier 32 and data on the color pattern 33.

The server 60 is, for example, a different computer than the degradation state determination apparatus 10. The server 60 is, for example, located in the management facility 61 and may manage data such as the retreading and repair history of the tires 30, in addition to relaying indicator data to the printing apparatus 51.

The management facility 61 is a facility for managing the tires 30 mounted on the vehicle 20. In the present embodiment, the tires 30 are repaired, replaced, retreaded, and the like at the management facility 61. Although the degradation state determination system 1 can execute the processing for degradation state determination regardless of the location of the vehicle 20, the processing for degradation state determination is described in the present embodiment as being performed while the vehicle 20 is visiting the management facility 61. The terminal apparatus 50, the printing apparatus 51, and the server 60 may be located away from the management facility 61, but unless otherwise noted, the terminal apparatus 50, the printing apparatus 51, and the server 60 are assumed to be in the management facility 61.

An overview of the degradation state determination method performed by the degradation state determination apparatus 10 is now described. Generally, it is known that printed materials printed by color inkjet printers or the like fade as the ink ages. The degree of fading varies depending on the color of the ink, even under the same environmental conditions. The degree of fading also differs depending on degradation factors in the environment (such as heat or ultraviolet light), even for the same print material. In the degradation state determination method according to the present embodiment, at the time of replacement of the tire 30, for example, an indicator 31 is attached to the new tire 30 (see FIG. 2). The degradation state determination apparatus 10 later acquires an image of the indicator 31 and calculates the amount of a degradation factor in the environment in which the tire 30 was used from the change in color of the indicator 31. The degradation state determination apparatus 10 then determines the degradation state of the tire 30 based on the calculated amount of the degradation factor.

FIG. 3 is a diagram illustrating a configuration of the indicator 31 in the present embodiment. The indicator 31 includes an identifier 32 and color patterns 33 printed on a print medium. The indicator 31 can be created inexpensively by printing with the printing apparatus 51. The identifier 32 is a two-dimensional code in the present embodiment but is not limited to a two-dimensional code, as long as the indicator 31 can be individually identified. The color pattern 33 is a pattern formed by applying a plurality of colors at different locations. The color pattern 33 is arranged in a checkerboard pattern in the present embodiment but is not limited to such an arrangement. The degradation state determination apparatus 10 determines the degradation state of the tire 30 based on the change in color of the color pattern 33. The selection of colors used in the color pattern 33 and other details are described below.

In the example in FIG. 2, the indicator 31 is provided on the sidewall of the tire 30, but the location where the indicator 31 is attached is not limited. As another example, the indicator 31 may be affixed to the surface of the inner liner of the tire 30 being retreaded. As yet another example, the indicator 31 may be attached to the bottom of a groove in the tread portion. A plurality of indicators 31 may be respectively attached to different locations on the tire 30. In this case, even if some of the indicators 31 fall off during travel by the vehicle 20 or become too dirty to be identified, the remaining indicators 31 can still be used to identify a change in color of the color pattern 33. Another advantage of providing a plurality of indicators 31 is that if a third party intentionally heats some of the indicators 31 to cause them to degrade, the remaining indicators 31 can be used to prevent index manipulation. Provision of a plurality of indicators 31 also enables independent estimation of the degree of degradation of each component in the tire 30. The robustness of the degradation state determination is thereby improved.

The degradation state determination system 1 is not limited to the configuration illustrated in FIG. 2. In the present embodiment, the printing apparatus 51 is connected to the network 40 via the server 60, but the printing apparatus 51 may be directly connectable to the network 40, for example. In such a case, the server 60 may be omitted, and the degradation state determination system 1 may be configured by the degradation state determination apparatus 10, the terminal apparatus 50, and the printing apparatus 51.

The constituent elements of the degradation state determination apparatus 10 are now described in detail. The communication interface 11 is configured to include one or more communication modules that connect to the network 40. The communication interface 11 may include a communication module corresponding to mobile communication standards, such as 4G (4^{th} Generation) and 5G (5^{th} Generation). The communication interface 11 may include a communication module corresponding to wired LAN standards (for example, 1000BASE-T). The communication interface 11 may include a communication module corresponding to wireless LAN standards (for example, IEEE802.11).

The memory 12 includes one or more memories. The memory can, for example, be a semiconductor memory, a magnetic memory, or an optical memory, but is not limited to these examples and can be any memory. The memory 12 is, for example, built into the degradation state determination apparatus 10, but the memory 12 can also be configured to be accessed externally by the degradation state determination apparatus 10 via any interface.

The memory 12 stores various data used in the various calculations performed by the controller 13. The memory 12 may also store the results and intermediate data of the various calculations performed by the controller 13.

In the present embodiment, the memory 12 includes a color change database 121, a degradation determination model 122, and an indicator database 123. The color change database 121 includes data indicating the relationship between the change in color of the indicator 31 and the amount of the degradation factor that causes the tire 30 to degrade. The degradation determination model 122 is a model for determining the degradation state of the tire 30 based on the amount of a degradation factor. The degradation determination model 122 may, for example, be generated by machine learning or the like and may be a mathematical model that takes the amount of the degradation factor as input and outputs a predicted service life. The indicator database 123 includes data that associates the identifier 32 of the indicator 31 with information on the color pattern 33. The information on the color pattern 33 includes the colors used, the color components that make up each color, and so on. The information on the color pattern 33 may also include the position of each color, the type of pattern for the color arrangement (such as a checkerboard pattern), and the like. The information on the color pattern 33 may also include the initial state of each color by gradation of each color component. Here, the initial state is the state of the indicator 31 at the time of creation.

The controller 13 includes one or more processors. The processors can, for example, be a general purpose processor or dedicated processor specialized for specific processing, but these examples are not limiting, and any processor may be used. The controller 13 controls the overall operations of the degradation state determination apparatus 10.

Here, the degradation state determination apparatus 10 may have the following software configuration. One or more programs used to control the operations of the degradation state determination apparatus 10 are stored in the memory 12. When read by the processor of the controller 13, the programs stored in the memory 12 cause the controller 13 to function as the data acquisition interface 131, the color change database generator 132, the degradation determination model generator 133, the color selector 134, the identifier extractor 135, the color component extractor 136, the degradation determiner 137, and the determination result output interface 138.

The data acquisition interface 131 acquires experimental data and images of the indicator 31, described below, via the network 40 and the communication interface 11.

The color change database generator 132 generates the color change database 121 and stores the generated color change database 121 in the memory 12. The color change database generator 132 can generate the color change database 121 by extracting information on colors and information on degradation factors from experimental data and generating data indicating the relationship between the change in color and the amount of a degradation factor.

The degradation determination model generator 133 generates the degradation determination model 122 and stores the generated degradation determination model 122 in the memory 12. The degradation determination model 122 is a model that takes an amount of a degradation factor as input and outputs an index of the degradation state of the tire 30. The index of the degradation state of the tire 30 is, for example, an index pertaining to durability, such as service life, or an index pertaining to driving performance, such as rolling resistance and wet grip, but these examples are not limiting. The degradation determination model generator 133 may acquire performance data, acquirable via the network 40 and the communication interface 11, indicating the actual degradation state of the tire 30 and may generate the degradation determination model 122 based on the performance data. The performance data may, for example, be data that is obtained from actual driving or testing of the vehicle 20 and indicates the degradation state of the tire 30 when a specific amount of a specific degradation factor is provided to the tire 30. As an example, the performance data may indicate the actual service life of the tire 30 when a new tire 30 of a specific type is exposed to an environment with a temperature of 20°C to 80°C and 20% to 80% oxygen for 10 to 10000 hours. The degradation determination model generator 133 may generate the degradation determination model 122 by machine learning using the performance data as training data.

The color selector 134 selects colors to be used for the indicator 31 so that the amount of the degradation factor can be identified in the degradation state determination performed by the degradation determiner 137. The color selector 134 then outputs the indicator data (print data) so that the color pattern 33 including the selected colors is printed by the printing apparatus 51.

The identifier extractor 135 extracts the identifier 32 from the image of the indicator 31 acquired by the data acquisition interface 131. The identifier 32 extracted by the identifier extractor 135 is used to identify the indicator 31 in the degradation state determination performed by the degradation determiner 137.

The color component extractor 136 extracts color components of the colors included in the color pattern 33 from the image of the indicator 31 acquired by the data acquisition interface 131. The color components extracted by the color component extractor 136 are used to identify the amount of the degradation factor in the degradation state determination performed by the degradation determiner 137. The color component extractor 136 may extract color component values in the RGB color space, HSV color space, and Lab color space at the position of each ink identified in the image and may execute a process to calculate an average value among color component values of the same color.

The degradation determiner 137 uses the degradation determination model 122 to determine the degradation state of the tire 30 based on the color change database 121 and the color components extracted from the image of the indicator 31 by the color component extractor 136. In detail, the degradation determiner 137 estimates (calculates) the amount of the degradation factor affected by the environment in which the tire 30 is used by comparing the color components extracted from the image of the indicator 31 with the data in the color change database 121. The degradation determiner 137 inputs the estimated amount of the degradation factor into the degradation determination model 122 and takes the outputted index of the degradation state of the tire 30 as the determination result.

In the present embodiment, the degradation determiner 137 calculates the color components extracted from the image of the indicator 31 as a color component change by comparing the color components with the initial state of the indicator 31. The degradation determiner 137 can obtain the initial state of the color components of the indicator 31 from the indicator database 123. The degradation determiner 137 estimates the amount of the degradation factor by comparing the color component change with the data in the color change database 121. As a result of the color component change being obtained by comparison with the initial state in the present embodiment, the change in color can be accurately determined even if there are individual differences (such as printing variations) at the time the indicator 31 is created. The degradation state of the target object can therefore be determined with even higher accuracy.

The determination result output interface 138 outputs the determination result of the degradation state determination performed by the degradation determiner 137. The determination result outputted by the determination result output interface 138 is displayed on a display or the like of the terminal apparatus 50. For example, in a case in which the server 60 is configured to be connected to another display, the determination result may be displayed on the display connected to the server 60. Based on the determination result, the manager of the management facility 61, for example, can present the user with the expected service life in the case of replacing, repairing, or retreading the tire 30, a suitable vulcanization method, or the like.

The degradation state determination method performed by the degradation state determination apparatus 10 is described below with reference to flowcharts and the like. The degradation state determination method according to the present embodiment includes a first process, a second process, and a third process. The first process is for generating the color change database 121 and the degradation determination model 122 and is executed before the second and third processes. The second process is for creating (printing by the printing apparatus 51) the indicator 31 to be attached to the tire 30 and is executed before the third process. The third process is for acquiring an image of the indicator 31 attached to the tire 30 and determining the degradation state of the tire 30.

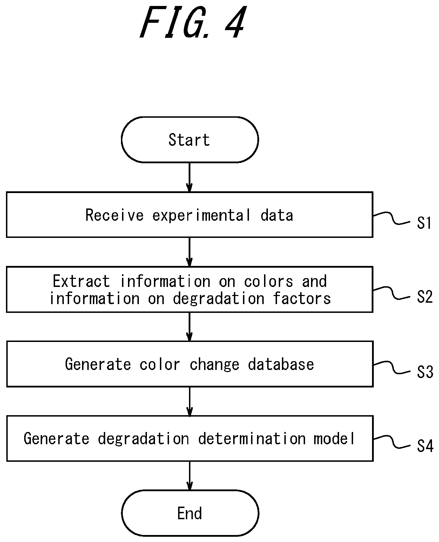

FIG. 4 is a flowchart illustrating an example of the first process included in the degradation state determination method.

The data acquisition interface 131 receives experimental data (step S1). The experimental data is data obtained by experimentally providing, to an experimental indicator created by the printing apparatus 51 in the same manner as the indicator 31, a degradation factor to cause the colors to fade. Similar to the color pattern 33 of the indicator 31, the experimental indicator has a pattern in which a plurality of colors is arranged. The experimental data includes information on the colors and information on the degradation factor. The experimental data may include a captured image of the experimental indicator and information on the degradation factor in the form of text information. The information on the degradation factor indicates the amount of the degradation factor provided experimentally. This may, for example, be information such as 20 hours of exposure to an environment with a temperature of 20°C and 20% oxygen.

The experimental data is transmitted to the degradation state determination apparatus 10 by, for example, the terminal apparatus 50. An application installed on the terminal apparatus 50 may associate the image of the experimental indicator with the information on the degradation factor and transmit the combination as the experimental data to the degradation state determination apparatus 10. Here, the terminal apparatus 50 may be at a different location (such as an experimental facility) than the management facility 61 and transmit the experimental data.

The color change database generator 132 extracts information on colors and information on degradation factors from the experimental data (step S2).

The color change database generator 132 generates data illustrating the relationship between the change in color and the amount of the degradation factor, and associates the data to generate the color change database 121 (step S3, color change database generation step).

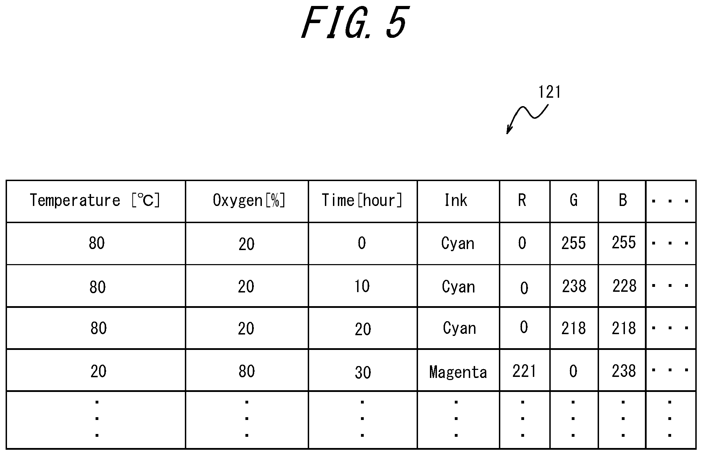

FIG. 5 is a diagram illustrating a configuration example of the color change database 121. In the example in FIG. 5, the color change database 121 is configured as a set of data that associates temperature (Temperature), oxygen (Oxygen), time exposed to conditions (Time), color or the ink used (Ink), and color components of the color used (R, G, B). The ink is, for example, indicated as cyan, magenta, yellow, or the like. The color components are indicated by a gradation from 0 to 255 for each of red (R), green (G), and blue (B).

In the example in FIG. 5, it is clear from the first and second columns of the color change database 121 that cyan, which had 255 G and 255 B as color components, fades to 238 G and 228 B when exposed to an environment with a temperature of 80°C and 20% oxygen for 10 hours. The color change database 121 thus indicates the relationship between changes in color and the amounts of degradation factors. When a change in color (fading) occurs in the color pattern 33 of the indicator 31, these relationships can be used to estimate the amount of the degradation factor that caused the fading by searching for data in the color change database 121 that indicates the same color component change.

The degradation determination model generator 133 generates the degradation determination model 122 (step S4). As described above, the degradation determination model 122 is a model that takes an amount of a degradation factor as input and outputs an index of the degradation state of the tire 30. Generation of the degradation determination model 122 in addition to the color change database 121 enables output of an index of the degradation state of the tire 30 based on the fading of the color pattern 33 of the indicator 31, using the estimated amount of the degradation factor as an intermediate parameter.

The items in the color change database 121 are not limited to the example in FIG. 5. For example, the degradation factors may include at least one of heat, oxygen, water, ultraviolet light, and ozone. By inclusion of such degradation factors that can be assumed in an outdoor environment, the accuracy of determining the degradation state of target objects used outdoors, including tires 30, can be improved.

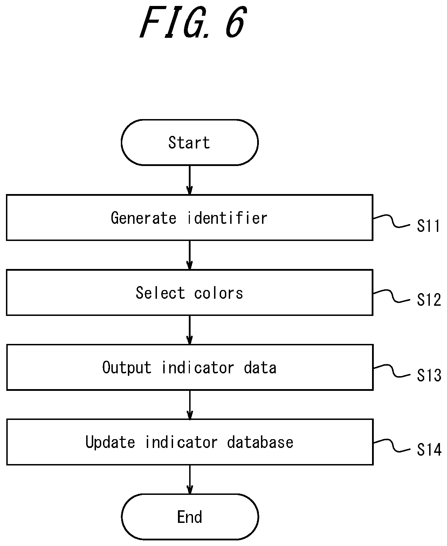

FIG. 6 is a flowchart illustrating an example of the second process included in the degradation state determination method. The second process is executed after the first process. The second process is, for example, executed when the tire 30 of the vehicle 20 is replaced with a new tire 30 at the management facility 61.

The color selector 134 generates an identifier 32 to be printed on the indicator 31 (step S11). The identifier 32 is used to associate the indicator 31 and the information on the color pattern 33 in the indicator database 123. The identifier 32 enables identification of each of the indicators 31, thus enabling the initial state to be recognized and individually managed. The color selector 134 may, for example, use a UUID (Universally Unique Identifier).

The color selector 134 selects the colors to be used for the indicator 31 so that the amount of the degradation factor can be identified (step S12, color selection step). As described above, the degree of fading depends on the degradation factor in the environment and the color of the ink. The color selector 134 may first select a color that varies significantly (color with high sensitivity) depending on the degradation factor assumed in the environment in which the tire 30 is used. For example, the color selector 134 may select a color (such as magenta) that fades significantly due to high temperature (such as 80°C) when high temperature is assumed as a degradation factor. The color selector 134 may further select a color for contrast. For example, the color selector 134 may select a color (such as yellow) that fades due to high temperature only under aerobic conditions as a contrast color. In a case in which no fading in yellow is observed whereas magenta is significantly faded during the degradation state determination, for example, the degradation factor can more accurately be identified as high temperature rather than oxygen. Here, the color selector 134 refers to the color change database 121 in selecting colors. The color selector 134 also specifies the color components of the selected colors based on the data in the color change database 121 so that the amount of the degradation factor can be accurately identified during the degradation state determination. The color selector 134 specifies, for example, magenta with R of 255 and B of 255. The color selector 134 also determines the arrangement of each color in the color pattern 33. The position at which each color is arranged may be managed by coordinates.

The color selector 134 selects, for inclusion in the indicator data, colors with color components that are less likely to fade for the sake of the control correction described below.

The color selector 134 selects a plurality of colors that can identify the same degradation factor and generates indicator data so that each of the colors that can identify the same degradation factor is applied to a different position in the indicator 31. By the color pattern 33 being configured in this way, even if a portion of the indicator 31 becomes unidentifiable due to dirt or the like after being attached to the tire 30, the degradation factor can still be identified from the remaining colors. As in the example in FIG. 3, the color selector 134 may generate the indicator data so that a plurality of color patterns 33 are in different positions.

The color selector 134 outputs the indicator data including the identifier 32 and the data on the color pattern 33 (step S13). The printing apparatus 51 acquires the indicator data from the degradation state determination apparatus 10 as print data via the network 40 and the server 60 and creates the indicator 31 by printing. The created indicator 31 is attached to the tire 30. In the present embodiment, an image of the indicator 31 created by the terminal apparatus 50 is captured, and the image is transmitted to the degradation state determination apparatus 10 as an indication of the initial state of the indicator 31.

The color selector 134 updates the indicator database 123 (step S14). In other words, information on the indicator data outputted by the color selector 134 is added to the indicator database 123. The information about the created indicator 31 is managed by the indicator database 123.

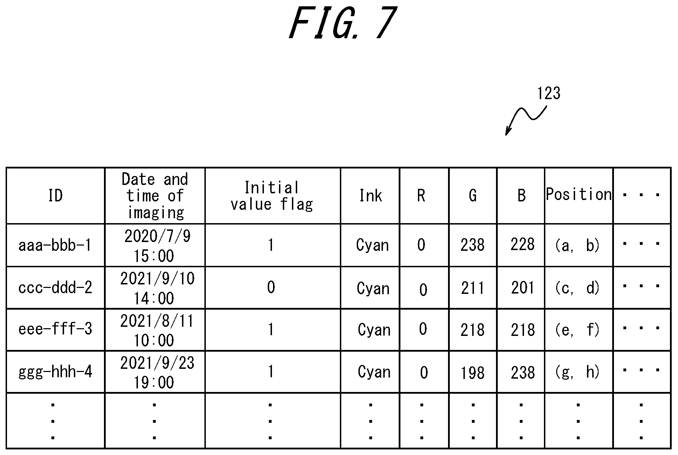

FIG. 7 is a diagram illustrating a configuration example of the indicator database 123. In the example in FIG. 7, the indicator database 123 is configured by a group of data in which the identifier 32 (ID), date and time of imaging, initial value flag, ink (Ink), color components (R, G, B), and color positions are associated. For a newly created indicator 31, information on the identifier 32 and color positions is extracted from the indicator data, and the data is added with the initial value flag set to "1". As described above, an image of the indicator 31 created by the terminal apparatus 50 is transmitted to the degradation state determination apparatus 10. The date and time of imaging, ink, and color components of this image are extracted and added to data on the newly created indicator 31. Here, the extraction of ink and color components may be performed by the color component extractor 136, and the color selector 134 may acquire the execution result of the color component extractor 136. In the indicator database 123, data with an initial value flag of "1" includes the initial state of the color of the indicator 31 having that identifier 32. Data with an initial value flag of "0" includes the color state after the indicator 31 having that identifier 32 is attached to the tire 30, and this data is added to the indicator database 123 by the third process.

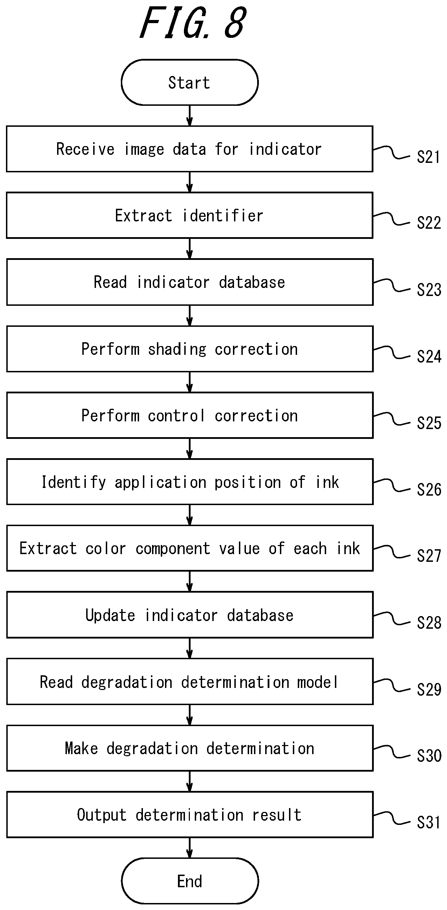

FIG. 8 is a flowchart illustrating an example of the third process included in the degradation state determination method. The third process is executed after the second process. The third process is, for example, executed at the timing when maintenance of the tires 30 is performed at the management facility 61. The third process may therefore be executed multiple times.

The data acquisition interface 131 receives the image data for the indicator 31 (step S21).

The identifier extractor 135 extracts the identifier 32 from the image data acquired by the data acquisition interface 131 (step S22).

The degradation determiner 137 identifies the indicator 31 based on the identifier 32 extracted by the identifier extractor 135. The degradation determiner 137 reads the indicator database 123 (step S23) and acquires data such as the initial state of the color of the identified indicator 31.

The color component extractor 136 performs shading correction (step S24) on the image data acquired by the data acquisition interface 131. Shading correction corrects for differences in light intensity within the color pattern 33 caused by the imaging environment.

The color component extractor 136 performs control correction (step S25). The control correction is performed to accurately measure the change from the initial state of the color of the indicator 31. The color component extractor 136 extracts a color component in the color pattern 33 that is less likely to fade (such as the G component of cyan) and adjusts the gradation to the initial state. This process allows the light intensity to be matched to the image of the indicator 31 at the time of creation.

The color component extractor 136 identifies the application positions of all inks (colors) that the color pattern 33 has based on the data in the indicator database 123 (step S26). For example, the positions are identified for cyan, magenta, yellow, and at least some mixture of these colors included in the color pattern 33.

The color component extractor 136 extracts the color component value of each ink whose position has been identified (step S27, color component extraction step). For example, in a case in which a plurality of color patterns 33 is included as in the example in FIG. 3, an average value may be used as the color component value for each ink. In a case in which a portion is dirty, the color component value of each ink may be extracted using only the color pattern 33 in the region that is not dirty. Although degradation determination may be performed using the extracted color component values of each ink themselves, degradation determination is performed in the present embodiment using the difference from the initial state. The color component extractor 136 therefore calculates the change from the initial state of the color component value of each ink using the data in the indicator database 123.

Here, the color component extractor 136 updates the indicator database 123 in the same manner as in step S14 of the second process (step S28). The configuration of the data added to the indicator database 123 is the same as in step S14 of the second process, except that the initial value flag is "0".

The degradation determiner 137 reads the color change database 121. The degradation determiner 137 also reads the degradation determination model 122 (step S29).

The degradation determiner 137 uses the degradation determination model 122 to make a degradation determination for the tire 30 based on the color change database 121 and the color components extracted from the image (step S30, degradation determination step).

First, the degradation determiner 137 extracts data corresponding to the change from the initial state of the color component values from the color change database 121 to estimate the amount of the degradation factor that the tire 30 has received from the environment. For example, in a case in which cyan, which had 253 for G and 253 for B as color components in the initial state, has faded (changed) to 236 for G and 226 for B, the degradation determiner 137 calculates 17 for G and 27 for B as the color component change. The degradation determiner 137 may extract data corresponding to such a color component change based on the color change database 121 to estimate that the amount of the degradation factor is "10 hours of exposure to an environment with a temperature of 80°C and 20% oxygen". The degradation determiner 137 may perform the estimation with known methods, such as regression analysis on the data constituting the color change database 121.

The degradation determiner 137 may also calculate the color component change for a plurality of color components that exhibit different changes for one degradation factor and may identify the amount of the degradation factor from the plurality of color component changes. For example, assume that the color change database 121 contains data indicating that the R of magenta changes from 255 to 220 when "exposed for 10 hours to an environment with a temperature of 80°C and 20% oxygen". By calculating and comparing the change in R of magenta, for example, in addition to cyan in the above example, the degradation determiner 137 can increase the accuracy of estimating the amount of the degradation factor and can consequently determine the degradation state of the tire 30 with higher accuracy.

The degradation determiner 137 inputs the amount of the degradation factor into the degradation determination model 122 to calculate an index of the degradation state of the tire 30. The degradation determiner 137 may calculate a plurality of indices of the degradation state of the tire 30, including the service life.

The determination result output interface 138 outputs the determination result by the degradation determiner 137 (step S31). The administrator of the management facility 61 may propose a method or the like for replacing, repairing, or retreading the tire 30 to the user based on the index of the degradation state of the tire 30 indicated as the determination result.

As described above, the degradation state determination method and degradation state determination apparatus 10 according to the present embodiment can determine the degradation state of the target object with high accuracy through the above configuration.

### (Second Embodiment)

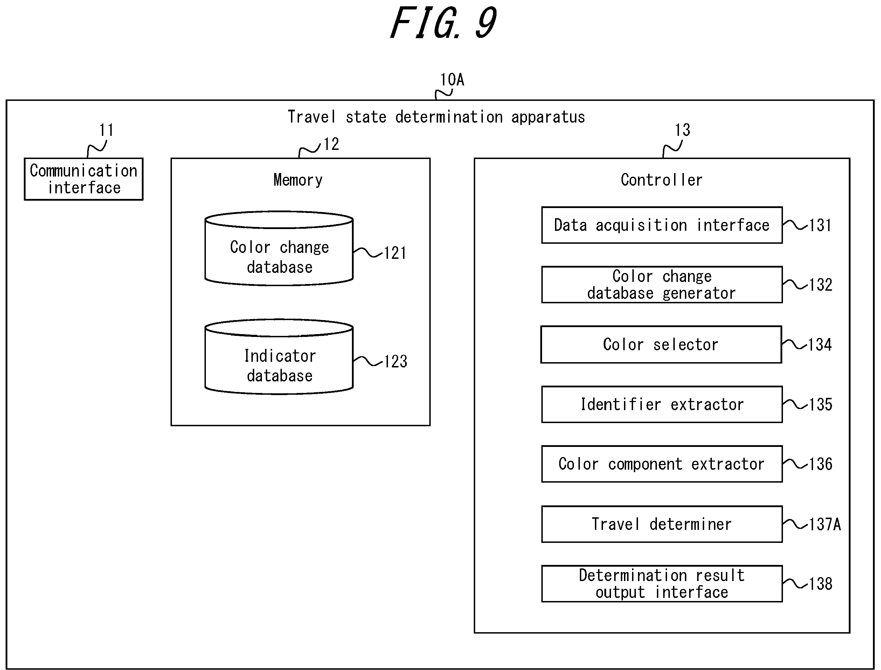

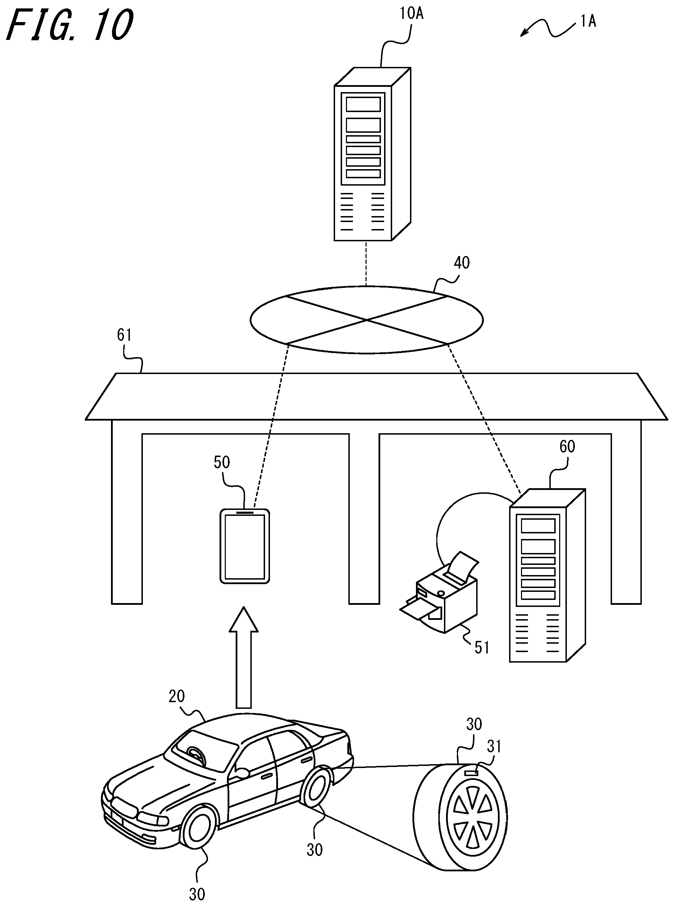

FIG. 9 illustrates a configuration example of a travel state determination apparatus 10A not according to the present invention but useful for understanding the present invention. FIG. 10 illustrates a configuration example of a travel state determination system 1A that includes the travel state determination apparatus 10A in FIG. 9. The travel state determination apparatus 10A is an apparatus for determining a travel state of a vehicle 20 based on a color of an indicator 31 attached to a tire 30 mounted on the vehicle 20. In the present specification, the travel state includes a state such as the environment in which the vehicle 20 has traveled (as an example, a "cold region"). The travel state may also include the manner in which the vehicle 20 has traveled (as an example, "high speed travel"). The travel state of the vehicle 20 as determined by the travel state determination apparatus 10A may, for example, be provided to enable a user to replace the tire 30 with a more preferred type or to select a suitable vulcanization method when retreading the tire 30.

The travel state determination apparatus 10A includes a communication interface 11, a memory 12, and a controller 13. The controller 13 includes a data acquisition interface 131, a color change database generator 132, a color selector 134, an identifier extractor 135, a color component extractor 136, a travel determiner 137A, and a determination result output interface 138. In terms of hardware configuration, the travel state determination apparatus 10A may, for example, be a computer such as a server. Details of the constituent elements of the travel state determination apparatus 10A are described below.

The travel state determination apparatus 10A, together with at least one of a terminal apparatus 50, a printing apparatus 51, and a server 60 connected by a network 40, may form a travel state determination system 1A. The network 40, the terminal apparatus 50, the printing apparatus 51, and the server 60 are the same as in the first embodiment. The management facility 61 is a facility for managing the tires 30 mounted on the vehicle 20, as in the first embodiment.

An overview of the travel state determination method performed by the degradation state determination apparatus 10A is now described. Generally, it is known that printed materials printed by color inkjet printers or the like fade as the ink ages. The degree of fading varies depending on the color of the ink, even under the same environmental conditions. The degree of fading also differs depending on degradation factors in the environment (such as heat or ultraviolet light), even for the same print material. In the travel state determination method according to the present embodiment, at the time of replacement of the tire 30, for example, an indicator 31 is attached to the new tire 30 (see FIG. 10). The travel state determination apparatus 10A later acquires an image of the indicator 31 and calculates the amount of a degradation factor in the environment in which the tire 30 was used from the change in color of the indicator 31. The travel state determination apparatus 10A then determines the travel state of the vehicle 20 based on the calculated amount of the degradation factor.

The configuration of the indicator 31 in the present example is the same as in the first embodiment (see FIG. 3). The travel state determination apparatus 10A determines the travel state of the vehicle 20 based on the change in color of the color pattern 33.

In the example in FIG. 10, the indicator 31 is provided on the sidewall of the tire 30, but the location where the indicator 31 is attached is not limited. As another example, the indicator 31 may be affixed to the surface of the inner liner of the tire 30 being retreaded. As yet another example, the indicator 31 may be attached to the bottom of a groove in the tread portion. A plurality of indicators 31 may be respectively attached to different locations on the tire 30. In this case, even if some of the indicators 31 fall off during travel by the vehicle 20 or become too dirty to be identified, the remaining indicators 31 can still be used to identify a change in color of the color pattern 33. Another advantage of providing a plurality of indicators 31 is that if a third party intentionally heats some of the indicators 31 to cause them to degrade, the remaining indicators 31 can be used to prevent index manipulation. Provision of a plurality of indicators 31 also enables independent estimation of the degree of degradation of each component in the tire 30. The robustness of the travel state determination is thereby improved.

The travel state determination system 1A is not limited to the configuration illustrated in FIG. 10. In the present embodiment, the printing apparatus 51 is connected to the network 40 via the server 60, but the printing apparatus 51 may be directly connectable to the network 40, for example. In such a case, the server 60 may be omitted, and the travel state determination system 1A may be configured by the travel state determination apparatus 10A, the terminal apparatus 50, and the printing apparatus 51.

The constituent elements of the travel state determination apparatus 10A are now described in detail. The communication interface 11 is configured to include one or more communication modules that connect to the network 40, as in the first embodiment.

The memory 12 includes one or more memories, as in the first embodiment. In the present example, the memory 12 includes a color change database 121 and an indicator database 123. The color change database 121 and the indicator database 123 are the same as in the first embodiment.

The controller 13 includes one or more processors. The processors can, for example, be a general purpose processor or dedicated processor specialized for specific processing, but these examples are not limiting, and any processor may be used. The controller 13 controls the overall operations of the travel state determination apparatus 10A.

Here, the travel state determination apparatus 10A may have the following software configuration. One or more programs used to control the operations of the travel state determination apparatus 10A are stored in the memory 12. When read by the processor of the controller 13, the programs stored in the memory 12 cause the controller 13 to function as the data acquisition interface 131, the color change database generator 132, the color selector 134, the identifier extractor 135, the color component extractor 136, the travel determiner 137A, and the determination result output interface 138. The data acquisition interface 131, the color change database generator 132, the color selector 134, the identifier extractor 135, and the color component extractor 136 are the same as in the first embodiment.

The travel determiner 137A determines the travel state of the vehicle 20 based on the color change database 121 and the color components extracted from the image of the indicator 31 by the color component extractor 136. In detail, the travel determiner 137A estimates (calculates) the amount of the degradation factor affected by the environment in which the tire 30 is used by comparing the color components extracted from the image of the indicator 31 with the data in the color change database 121. The travel determiner 137A then determines the travel state of the vehicle 20 based on the estimated amount of the degradation factor. The travel determiner 137A may, for example, determine that the vehicle 20 has traveled for 10 hours or more in an environment with 20% oxygen and a high temperature, such that the temperature of the tire 30 reaches 80°C. Furthermore, the travel determiner 137A may include in the determination result an estimate of the air temperature (such as 35°C) at which the temperature of the tire 30 reaches 80°C.

In the present example, the travel determiner 137A calculates the color components extracted from the image of the indicator 31 as a color component change by comparing the color components with the initial state of the indicator 31. The travel determiner 137A can obtain the initial state of the color components of the indicator 31 from the indicator database 123. The travel determiner 137A estimates the amount of the degradation factor by comparing the color component change with the data in the color change database 121. As a result of the color component change being obtained by comparison with the initial state in the present embodiment, the change in color can be accurately determined even if there are individual differences (such as printing variations) at the time the indicator 31 is created. The travel state of the vehicle 20 can therefore be determined with even higher accuracy.

The determination result output interface 138 outputs the determination result of the travel state determination performed by the travel determiner 137A. The determination result outputted by the determination result output interface 138 is displayed on a display or the like of the terminal apparatus 50. For example, in a case in which the server 60 is configured to be connected to another display, the determination result may be displayed on the display connected to the server 60. Based on the determination result, the manager of the management facility 61, for example, can present the user with the expected service life in the case of replacing, repairing, or retreading the tire 30, a suitable vulcanization method, or the like.

The travel state determination method performed by the travel state determination apparatus 10A is described below with reference to flowcharts and the like. The travel state determination method according to the present embodiment includes a first process, a second process, and a third process. The first process is for generating the color change database 121 and is executed before the second and third processes. The second process is for creating (printing by the printing apparatus 51) the indicator 31 to be attached to the tire 30 and is executed before the third process. The third process is for acquiring an image of the indicator 31 attached to the tire 30 and determining the travel state of the vehicle 20.

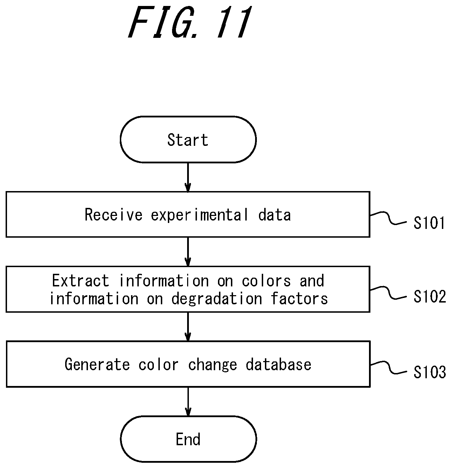

FIG. 11 is a flowchart illustrating an example of the first process included in the travel state determination method.

The data acquisition interface 131 receives experimental data (step S101). The experimental data is data obtained by experimentally providing, to an experimental indicator created by the printing apparatus 51 in the same manner as the indicator 31, a degradation factor to cause the colors to fade. Similar to the color pattern 33 of the indicator 31, the experimental indicator has a pattern in which a plurality of colors is arranged. The experimental data includes information on the colors and information on the degradation factor. The experimental data may include a captured image of the experimental indicator and information on the degradation factor in the form of text information. The information on the degradation factor indicates the amount of the degradation factor provided experimentally. This may, for example, be information such as 20 hours of exposure to an environment with a temperature of 20°C and 20% oxygen.

The experimental data is transmitted to the travel state determination apparatus 10A by, for example, the terminal apparatus 50. An application installed on the terminal apparatus 50 may associate the image of the experimental indicator with the information on the degradation factor and transmit the combination as the experimental data to the travel state determination apparatus 10A. Here, the terminal apparatus 50 may be at a different location (such as an experimental facility) than the management facility 61 and transmit the experimental data.

The color change database generator 132 extracts information on colors and information on degradation factors from the experimental data (step S102).

The color change database generator 132 generates data illustrating the relationship between the change in color and the amount of the degradation factor, and associates the data to generate the color change database 121 (step S103, color change database generation step). The configuration of the color change database 121 is the same as in the first embodiment (see FIG. 5).

The second process included in the travel state determination method is the same as in the first embodiment (see FIG. 6). The second process is executed after the first process. The second process is, for example, executed when the tire 30 of the vehicle 20 is replaced with a new tire 30 at the management facility 61.

The configuration of the indicator database 123 is the same as in the first embodiment (see FIG. 7).

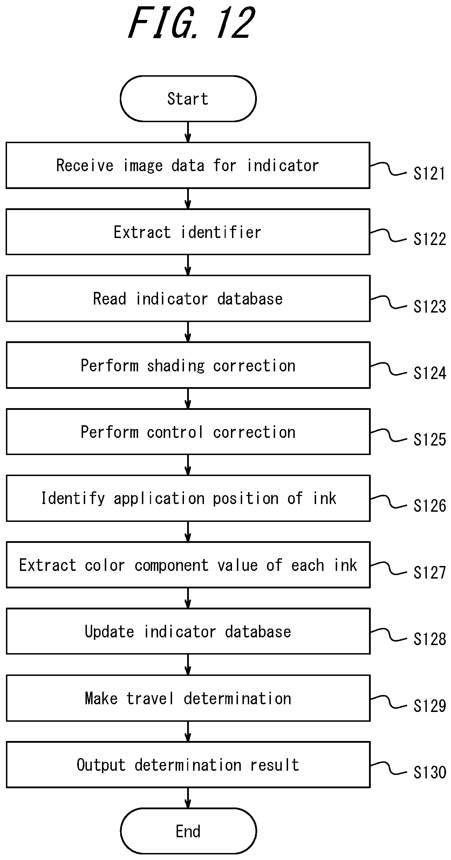

FIG. 12 is a flowchart illustrating an example of the third process included in the travel state determination method. The third process is executed after the second process. The third process is, for example, executed at the timing when maintenance of the tires 30 is performed at the management facility 61. The third process may therefore be executed multiple times.

The data acquisition interface 131 receives the image data for the indicator 31 (step S121).

The identifier extractor 135 extracts the identifier 32 from the image data acquired by the data acquisition interface 131 (step S122).

The travel determiner 137A identifies the indicator 31 based on the identifier 32 extracted by the identifier extractor 135. The travel determiner 137A reads the indicator database 123 (step S123) and acquires data such as the initial state of the color of the identified indicator 31.

The color component extractor 136 performs shading correction (step S124) on the image data acquired by the data acquisition interface 131. Shading correction corrects for differences in light intensity within the color pattern 33 caused by the imaging environment.

The color component extractor 136 performs control correction (step S125). The control correction is performed to accurately measure the change from the initial state of the color of the indicator 31. The color component extractor 136 extracts a color component in the color pattern 33 that is less likely to fade (such as the G component of cyan) and adjusts the gradation to the initial state. This process allows the light intensity to be matched to the image of the indicator 31 at the time of creation.

The color component extractor 136 identifies the application positions of all inks (colors) that the color pattern 33 has based on the data in the indicator database 123 (step S126). For example, the positions are identified for cyan, magenta, yellow, and at least some mixture of these colors included in the color pattern 33.

The color component extractor 136 extracts the color component value of each ink whose position has been identified (step S127, color component extraction step). For example, in a case in which a plurality of color patterns 33 is included as in the example in FIG. 3, an average value may be used as the color component value for each ink. In a case in which a portion is dirty, the color component value of each ink may be extracted using only the color pattern 33 in the region that is not dirty. Although travel determination may be performed using the extracted color component values of each ink themselves, travel determination is performed in the present example using the difference from the initial state. The color component extractor 136 therefore calculates the change from the initial state of the color component value of each ink using the data in the indicator database 123.

Here, the color component extractor 136 updates the indicator database 123 in the same manner as in step S14 of the second process (step S128). The configuration of the data added to the indicator database 123 is the same as in step S14 of the second process, except that the initial value flag is "0".

The travel determiner 137A reads the color change database 121 and makes a travel determination for the vehicle 20 based on the color change database 121 and the color components extracted from the image (step S129, travel determination step).

First, the travel determiner 137A extracts data corresponding to the change from the initial state of the color component values from the color change database 121 to estimate the amount of the degradation factor that the tire 30 has received from the environment. For example, in a case in which cyan, which had 253 for G and 253 for B as color components in the initial state, has faded (changed) to 236 for G and 226 for B, the travel determiner 137A calculates 17 for G and 27 for B as the color component change. The travel determiner 137A may extract data corresponding to such a color component change based on the color change database 121 to estimate that the amount of the degradation factor is "10 hours of exposure to an environment with a temperature of 80°C and 20% oxygen". In other words, the travel determiner 137A may determine that the travel state of the vehicle 20 was "10 hours of travel in an environment with a temperature of 80°C and 20% oxygen". The travel determiner 137A may perform the estimation with known methods, such as regression analysis on the data constituting the color change database 121.

The travel determiner 137A may also calculate the color component change for a plurality of color components that exhibit different changes for one degradation factor and may identify the amount of the degradation factor from the plurality of color component changes. For example, assume that the color change database 121 contains data indicating that the R of magenta changes from 255 to 220 when "exposed for 10 hours to an environment with a temperature of 80°C and 20% oxygen". By calculating and comparing the change in R of magenta, for example, in addition to cyan in the above example, the travel determiner 137A can increase the accuracy of estimating the amount of the degradation factor and can consequently determine the travel state of the vehicle 20 with higher accuracy. The travel determiner 137A may also calculate the color component change for a plurality of color components that exhibit different changes for one degradation factor and may estimate a travel state opposite that of the degradation factor in a case in which little change is observed in all of the color components. For example, in a case in which no change is observed both in a color component that is sensitive to heat and a color component that is not sensitive to heat, the travel determiner 137A may estimate that the vehicle 20 has traveled in a cold region with low temperatures.

The travel determiner 137A may identify a major degradation factor and include that degradation factor in the determination result of the travel state of the vehicle 20. For example, in a case in which heat is a major degradation factor, a proposal interface 139 may include, in the determination result, an estimation that the vehicle 20 frequently travels under high temperatures, such as during the daytime.

The determination result output interface 138 outputs the determination result by the travel determiner 137A (step S130). The administrator of the management facility 61 may propose a method or the like for replacing, repairing, or retreading the tire 30 to the user based on the travel state of the vehicle 20 indicated as the determination result. For example, in a case in which the determination result indicates that the vehicle 20 frequently travels under high temperatures, the manager of the management facility 61 may suggest the use of a fuel-efficient product in retreading to suppress the thermal aging of the tire 30. The fuel-efficient product may, for example, be a pre-cured tread with low rolling resistance. For example, in a case in which the determination result indicates that the vehicle 20 is frequently exposed to strong ultraviolet light while traveling, the manager of the management facility 61 may suggest switching the mounting positions of the tires 30 if the vehicle 20 has double wheels (double tires), so that the outer and inner wheels trade places.

As described above, the travel state determination method and travel state determination apparatus 10A according to the present example can determine the travel state of the vehicle 20 with high accuracy through the above configuration.

Although embodiments of the present invention have been described based on the drawings and examples, it is to be noted that various changes or modifications will be apparent to those skilled in the art based on the present invention. Therefore, such changes or modifications are to be understood as included within the scope of the present invention. For example, the functions and the like included in the components, steps, and the like may be reordered in any logically consistent way, and components, steps, and the like may be combined into one or divided. An embodiment of the present invention can also be realized as a program to be executed by a processor provided in an apparatus or as a storage medium with a program recorded thereon. Such embodiments are also to be understood as included within the scope of the present invention.

The image of the indicator 31 used to extract color components in the color component extraction step of the above embodiment is not limited to an image captured by irradiating visible light. For example, the image data for the indicator 31 may be an image captured by irradiating non-visible light such as ultraviolet (UV) light. In an image captured by irradiating non-visible light, the color change (sensitivity) to a specific degradation factor may be greater than in the case of irradiating visible light. Therefore, an image captured by irradiating with non-visible light may be used in cases in which the effect of a specific degradation factor is to be examined in detail.

### REFERENCE SIGNS LIST

- 1: Degradation state determination system
- 1A: Travel state determination system
- 10: Degradation state determination apparatus
- 10A: Travel state determination apparatus
- 11: Communication interface
- 12: Memory
- 13: Controller
- 20: Vehicle
- 30: Tire
- 31: Indicator
- 32: Identifier
- 33: Color pattern
- 40: Network
- 50: Terminal apparatus
- 51: Printing apparatus
- 60: Server
- 61: Management facility
- 121: Color change database
- 122: Degradation determination model
- 123: Indicator database
- 131: Data acquisition interface
- 132: Color change database generator
- 133: Degradation determination model generator
- 134: Color selector
- 135: Identifier extractor
- 136: Color component extractor
- 137: Degradation determiner
- 137A: Travel determiner
- 138: Determination result output interface

## Claims

1. A degradation state determination method for determining a degradation state of a target object that is a target of determination of the degradation state based on a color of at least one indicator (31) attached to the target object, the degradation state determination method comprising:
generating a color change database (121) including data indicating a relationship between a change in color of the indicator (31) and an amount of a degradation factor that causes the target object to degrade;
selecting a color to be used for the indicator (31) so that the amount of the degradation factor can be identified;
acquiring an image of the indicator (31) attached to the target object and extracting a color component from the image; and
determining, based on the color change database (121) and the color component extracted from the image, the degradation state of the target object using a degradation determination model (122) that takes the amount of the degradation factor as an input and outputs an index of the degradation state of the target object;
**characterized in that**
the selecting of the color includes selecting a plurality of colors that can identify the same degradation factor, and
the indicator (31) is configured by coating, at different locations, the plurality of colors that can identify the same degradation factor.

2. The degradation state determination method according to claim 1, wherein
the determining of the degradation state includes
calculating the color component extracted from the image as a color component change by comparison with an initial state, and
determining the degradation state of the target object based on the amount of the degradation factor identified from the color component change.

3. The degradation state determination method according to claim 2, wherein the determining of the degradation state includes calculating a plurality of color component changes by calculation of the color component change for a plurality of color components indicating different changes for one degradation factor, and identifying the amount of the degradation factor from the plurality of color component changes.

4. The degradation state determination method according to any one of claims 1 to 3, wherein the degradation factor includes at least one of heat, oxygen, water, ultraviolet light, and ozone.

5. The degradation state determination method according to any one of claims 1 to 4, wherein the at least one indicator (31) comprises a plurality of indicators (31) that are respectively attached to different locations on the target object.

6. The degradation state determination method according to any one of claims 1 to 5, wherein the target object is a tire (30).

7. A degradation state determination apparatus (10) for determining a degradation state of a target object that is a target of determination of the degradation state based on a color of an indicator (31) attached to the target object, the degradation state determination apparatus (10) comprising:
a color change database generator (132) configured to generate a color change database (121) including data indicating a relationship between a change in color of the indicator (31) and an amount of a degradation factor that causes the target object to degrade;
a color selector (134) configured to select a color to be used for the indicator (31) so that the amount of the degradation factor can be identified;
a color component extractor (136) configured to acquire an image of the indicator (31) attached to the target object and extract a color component from the image; and
a degradation determiner (137) configured to determine, based on the color change database (121) and the color component extracted from the image, the degradation state of the target object using a degradation determination model (122) that takes the amount of the degradation factor as an input and outputs an index of the degradation state of the target object;
**characterized in that**
selecting the color includes selecting a plurality of colors that can identify the same degradation factor, and
the indicator (31) is configured by coating, at different locations, the plurality of colors that can identify the same degradation factor.

## Patentansprüche

1. Verfahren zur Bestimmung des Degradationszustands eines Zielobjekts, das das Ziel der Bestimmung des Degradationszustands ist, anhand der Farbe mindestens eines am Zielobjekt angebrachten Indikators (31), wobei das Verfahren zur Bestimmung des Degradationszustands Folgendes umfasst:
Erstellen einer Farbänderungsdatenbank (121), die Daten einschließt, die eine Beziehung zwischen einer Farbänderung des Indikators (31) und dem Wert eines Degradationsfaktors anzeigen, der die Degradation des Zielobjekts verursacht;
Auswählen einer Farbe für den Indikator (31), damit der Wert des Degradationsfaktors identifizierbar ist;
Aufnehmen eines Bildes des am Zielobjekt angebrachten Indikators (31) und Extrahieren einer Farbkomponente aus dem Bild; und
Bestimmen, auf der Grundlage der Farbänderungsdatenbank (121) und der aus dem Bild extrahierten Farbkomponente, des Degradationszustands des Zielobjekts mithilfe eines Degradationsbestimmungsmodells (122), das den Wert des Degradationsfaktors als Eingabe nimmt und einen Index des Degradationszustands des Zielobjekts ausgibt;
**dadurch gekennzeichnet, dass**
das Auswählen der Farbe Auswählen einer Vielzahl von Farben einschließt, die denselben Degradationsfaktor identifizieren können, und
der Indikator (31) so konfiguriert ist, dass an verschiedenen Stellen eine Vielzahl von Farben aufgetragen wird, die jeweils denselben Degradationsfaktor identifizieren können.

2. Verfahren zur Bestimmung des Degradationszustands nach Anspruch 1, wobei
das Bestimmen des Degradationszustands einschließt:
Berechnen der aus dem Bild extrahierten Farbkomponente als Farbkomponentenänderung durch Vergleich mit einem Ausgangszustand, und
Bestimmen des Degradationszustands des Zielobjekts anhand des Werts des Degradationsfaktors, der aus der Farbkomponentenänderung identifiziert wurde.

3. Verfahren zur Bestimmung des Degradationszustands nach Anspruch 2, wobei das Bestimmen des Degradationszustands das Berechnen einer Vielzahl von Farbkomponentenänderungen durch Berechnung der Farbkomponentenänderung für eine Vielzahl von Farbkomponenten einschließt, die unterschiedliche Änderungen für einen Degradationsfaktor anzeigen, und Identifizieren des Werts des Degradationsfaktors aus der Vielzahl von Farbkomponentenänderungen.

4. Verfahren zur Bestimmung des Degradationszustands nach einem der Ansprüche 1 bis 3, wobei der Degradationsfaktor mindestens einen von Wärme, Sauerstoff, Wasser, ultraviolettes Licht und Ozon einschließt.

5. Verfahren zur Bestimmung des Degradationszustands nach einem der Ansprüche 1 bis 4, wobei der mindestens eine Indikator (31) eine Vielzahl von Indikatoren (31) umfasst, die jeweils an verschiedenen Stellen auf dem Zielobjekt angebracht sind.

6. Verfahren zur Bestimmung des Degradationszustands nach einem der Ansprüche 1 bis 5, wobei es sich bei dem Zielobjekt um einen Reifen (30) handelt.

7. Einrichtung (10) zur Bestimmung des Degradationszustands eines Zielobjekts, das das Ziel der Bestimmung des Degradationszustands ist, anhand der Farbe eines am Zielobjekt angebrachten Indikators (31), wobei die Einrichtung (10) zur Bestimmung des Degradationszustands Folgendes umfasst:
ein Farbänderungsdatenbankgenerator (132), der so konfiguriert ist, dass er eine Farbänderungsdatenbank (121) generiert, die Daten einschließt, die eine Beziehung zwischen einer Farbänderung des Indikators (31) und einem Wert eines Degradationsfaktors angeben, der die Degradation des Zielobjekts verursacht;
einen Farbwähler (134), der so konfiguriert ist, dass er eine Farbe auswählt, die für den Indikator (31) verwendet werden soll, damit der Wert des Degradationsfaktors ermittelt werden kann;
einen Farbkomponentenextraktor (136), der so konfiguriert ist, dass er ein Bild des am Zielobjekt angebrachten Indikators (31) aufnimmt und eine Farbkomponente aus dem Bild extrahiert; und
einen Degradationsbestimmer (137), der so konfiguriert ist, dass er auf der Grundlage der Farbänderungsdatenbank (121) und der aus dem Bild extrahierten Farbkomponente den Degradationszustand des Zielobjekts mithilfe eines Degradationsbestimmungsmodells (122) bestimmt, das den Wert des Degradationsfaktors als Eingabe nimmt und einen Index des Degradationszustands des Zielobjekts ausgibt;
**dadurch gekennzeichnet, dass**
Auswählen der Farbe Auswählen einer Vielzahl von Farben einschließt, die denselben Degradationsfaktor identifizieren können, und
der Indikator (31) so konfiguriert ist, dass an verschiedenen Stellen eine Vielzahl von Farben aufgetragen wird, die jeweils denselben Degradationsfaktor identifizieren können.

## Revendications

1. Procédé de détermination de l'état de dégradation d'un objet cible, qui constitue une cible de détermination de l'état de dégradation basé sur une couleur d'au moins un indicateur (31) fixé sur l'objet, cible, le procédé de détermination de l'état de dégradation comprenant :
la génération d'une base de données de changement de couleur (121) incluant des données indiquant une relation entre un changement de couleur de l'indicateur (31) et une quantité d'un facteur de dégradation qui provoque la dégradation de l'objet cible ;
la sélection d'une couleur à utiliser pour l'indicateur (31) afin que la quantité du facteur de dégradation puisse être identifiée ;
l'acquisition d'une image de l'indicateur (31) fixé à l'objet cible et l'extraction d'une composante de couleur de l'image ; et
la détermination, sur la base de la base de données de changement de couleur (121) et de la composante de couleur extraite de l'image, de l'état de dégradation de l'objet cible à l'aide d'un modèle de détermination de la dégradation (122) qui prend la quantité du facteur de dégradation comme une entrée et produit un indice de l'état de dégradation de l'objet cible ;
**caractérisé en ce que**
la sélection de la couleur inclut la sélection d'une pluralité de couleurs permettant d'identifier le même facteur de dégradation, et
l'indicateur (31) est configuré en appliquant, à différents endroits, la pluralité de couleurs qui peuvent identifier le même facteur de dégradation.

2. Procédé de détermination de l'état de dégradation selon la revendication 1, dans lequel
la détermination de l'état de dégradation inclut
le calcul de la composante de couleur extraite de l'image comme une variation de composante de couleur par comparaison avec un état initial, et
la détermination de l'état de dégradation de l'objet cible en fonction de la quantité du facteur de dégradation identifiée à partir du changement de la composante de couleur.

3. Procédé de détermination de l'état de dégradation selon la revendication 2, dans lequel la détermination de l'état de dégradation inclut le calcul d'une pluralité de changements de composantes de couleur par le calcul du changement de couleur pour une pluralité de composantes de couleur indiquant différents changements pour un facteur de dégradation, et l'identification de la quantité du facteur de dégradation à partir de la pluralité de changements de composantes de couleur.

4. Procédé de détermination de l'état de dégradation selon l'une quelconque des revendications 1 à 3, dans lequel le facteur de dégradation inclut au moins l'un de la chaleur, de l'oxygène, de l'eau, de la lumière ultraviolette et de l'ozone.

5. Procédé de détermination de l'état de dégradation selon l'une quelconque des revendications 1 à 4, dans lequel ledit au moins un indicateur (31) comprend une pluralité d'indicateurs (31) qui sont respectivement attachés à différents emplacements sur l'objet cible.

6. Procédé de détermination de l'état de dégradation selon l'une quelconque des revendications 1 à 5, dans lequel l'objet cible est un pneu (30).

7. Appareil (10) de détermination de l'état de dégradation destiné à déterminer l'état de dégradation d'un objet cible, qui constitue une cible de détermination de l'état de dégradation basé sur une couleur d'un indicateur (31) fixé à l'objet cible, l'appareil (10) comprenant :
un générateur de base de données de changement de couleur (132) configuré pour générer une base de données de changement de couleur (121) incluant des données indiquant une relation entre un changement de couleur de l'indicateur (31) et une quantité d'un facteur de dégradation qui provoque la dégradation de l'objet cible ;
un sélecteur de couleur (134) configuré pour sélectionner une couleur à utiliser pour l'indicateur (31) afin que la quantité du facteur de dégradation puisse être identifiée ;
un extracteur de composantes de couleur (136) configuré pour acquérir une image de l'indicateur (31) fixé à l'objet cible et pour extraire une composante de couleur de l'image ; et
un déterminant de dégradation (137) configuré pour déterminer, sur la base de la base de données de changement de couleur (121) et de la composante de couleur extraite de l'image, l'état de dégradation de l'objet cible en utilisant un modèle de détermination de dégradation (122) qui prend la quantité du facteur de dégradation comme entrée et produit un indice de l'état de dégradation de l'objet cible ;
**caractérisé en ce que**
la sélection de la couleur inclut la sélection d'une pluralité de couleurs permettant d'identifier le même facteur de dégradation, et
l'indicateur (31) est configuré en appliquant, à différents endroits, la pluralité de couleurs qui peuvent identifier le même facteur de dégradation.
